# EUROPEAN PATENT APPLICATION

(11) **EP 3 502 285 A1**
(43) Date of publication of application: **26.06.2019**
(21) Application number: 18153166.6
(22) Date of filing: 24.01.2018
(51) Int. Cl.: C22B 3/18, C22B 7/02, C22B 3/00, C22B 59/00

(54) **IMPROVED METHOD FOR RECOVERY OF PRECIOUS METALS**

(30) Priority: 23.12.2017 EP 17210559
(71) Applicant: B.R.A.I.N. AG, 64673 Zwingenberg (DE)
(72) Inventor: GABOR, Esther, 64673 Zwingenberg (DE)
(74) Representative: Fabry, Bernd

(57) **Abstract**

Suggested is a process for recovering precious metals from secondary sources encompassing the following steps:
(a) providing a secondary source selected from the group consisting of flow ashes, incineration ashes or their concentrates;
(b) subjecting said source of step (a) to a sieving process to obtain a fraction comprising particles having a diameter ranging from about 0.05 to about 1 mm; and
(c) subjecting the fraction obtained in step (b) to any process capable of recovering said precious metals from the waste residue

## Description

### FIELD OF INVENTION

The present invention is related to the area of biomining and discloses a process for recovering precious metals from secondary sources including a new process step for increasing the content of said precious metals prior to any recovery step.

### STATE OF THE ART

There is pressing a need for a clean, efficient process and system for recovering metals and useful materials from waste streams. Recycling of waste materials is highly desirable from many viewpoints, not the least of which is financial and ecological. Typically, waste streams are composed of a variety of types of waste materials. One such waste stream is generated from the recovery and recycling of metal-containing waste such as e.g. "e-waste" or "electronic scrap" or "waste electrical and electronic equipment" (WEEE) or industrial wastes such as fly ashes, incineration ashes or fines from industrial processes. This material is processed to recover ferrous and non- ferrous metals including copper, precious metals and rare earth elements.

Methods for biological treatment of ores and waste materials, so-called "biomining processes" to recover metals are of high commercial interest. While these processes involve lower environmental impact, they are traditionally optimized only for materials that are rich in target metals, in particular copper. Usually autotrophic bacteria are used for these purposes which are capable of producing sulfuric acid in which copper forms a soluble sulfate. Beside the fact that these processes run rather slowly, they typically do not work for precious metals like gold, silver or platinum, since these metals are insoluble in sulfuric acid. Nowadays, about 24 % of world-wide copper production uses bioleaching processes operating at low pH values of less than 3 and using carbon dioxide as the sole carbon source for the microorganisms.

European patents EP 0432935 B1 and EP 0695809 A1 (GEOBIOTICS) disclose processes to recover and reconcentrate gold from ores. The processes involve a bioleaching step preferably using algae or blue-green cyanobacteriae as suitable microorganisms for producing and releasing hydrocyanic acid to form gold complexes. Among various other microorganisms *Bacillus megaterium* and some *Pseudomonas sp.* are mentioned. The described process, however, is usually not economically viable due to high costs of nutrients, media components, water and energy, particularly if low value materials with trace amounts of metal contents are treated.

Therefore, it has been the object of the present invention increasing yield in microorganism driven processes for the recovery of precious metals from secondary sources, namely waste materials and particular from fly ashes, incineration ashes or e-scrap/WEEE by including a new process step for increasing the content of said precious metals prior to any recovery step.

One aspect of this disclosure is a method for a pretreatment of waste materials such as fly ashes, incineration ashes or fines from e-scrap/WEEE and their concentrates by sieving the material to recover different fractions comprising particles of a diameter of about 0.05 to more than 2mm.

### DESCRIPTION OF THE INVENTION

A first object of the present invention is directed to a process for recovering precious metals from secondary sources encompassing the following steps:
(a) providing a secondary source selected from the group consisting of fly ashes, incineration ashes, fines from e-scrap/WEEE or their concentrates;
(b) subjecting said source of step (a) to a sieving process to obtain a fraction comprising particles having a diameter ranging from about 0.05 to about 1 mm and preferably from about 0.1 to about 0.2 mm; and
(c) subjecting the fraction obtained in step (b) to any process capable of recovering said precious metals from the waste residue.

A second object of the present invention refers to a process for increasing the amount of precious metals in a secondary source, encompassing the following steps:
(a) providing a secondary source selected from the group consisting of fly ashes, incineration ashes, fines from e-scrap/WEEE or their concentrates;
(b) subjecting said source of step (a) to a sieving process to obtain a fraction comprising particles having a diameter ranging from about 0.05 to about 1 mm and preferably from about 0.1 to about 0.2 mm.

Fly ashes and fine fractions of incineration ashes are typically provided as powders, showing a particle size distribution from about 0.05 to about 2 mm and larger. Surprisingly it has been found that precious metals such as silver and gold are not uniformly distributed over the particle size range, but fractions comprising small particles sizes exhibit a significantly higher amount of said precious metals compared to other fractions comprising bigger particles. Therefore, the present invention teaches to subject said ashes or ash concentrates to a sieving process to obtain a fraction comprising particles having a diameter ranging from about 0.05 to about 1 mm and preferably from about 0.1 to about 0.2 mm showing an increased content of precious metals when compared to the remaining fractions.

Another advantage of the present invention is that at the same time when precious metals are enriched in the specific fraction, the amount of unwanted metals like for example led and copper is seriously depleted. Both results are seriously surprising, since there is nothing in the prior art that would teach or suggest that the amount of certain metals in a fraction of virgin or grinded powder of fly ashes or incineration ashes is depending on the particle size.

Another advantage of the present invention is not only directed to provide a fraction with higher content of desired precious metals and lower amounts of unwanted led and copper, but also refers to the surprising effect that said enriched fractions provide better results in the recovery, either by applying a bioleaching or bioflotation or bioflocculation step, compared to fractions comprising bigger particles. The result is even more surprising, since subjecting the combined sieving fractions for example to bioleaching does not provide any recovery of precious metals at all. It seems that the amount of poisonous metals in these specific sources is not tolerated by the respective micro-organisms.

### SOURCES

The present invention is directed to specific sources, namely fly ashes, incineration ashes and fines from e-scrap/WEEE and their concentrates.

**Fly ash,** also known as "pulverised fuel ash" in the United Kingdom, is a coal combustion product composed of fine particles that are driven out of the boiler with the flue gases. Fly ash material solidifies while suspended in the exhaust gases and is collected by electrostatic precipitators or filter bags. Since the particles solidify rapidly while suspended in the exhaust gases. The major consequence of the rapid cooling is that few minerals have time to crystallize, and that mainly amorphous, quenched glass remains. Nevertheless, some refractory phases in the pulverized coal do not melt (entirely), and remain crystalline. In consequence, fly ash is a heterogeneous material. SiO₂, Al₂O₃, Fe₂O₃ and occasionally CaO are the main chemical components present in fly ashes. The mineralogy of fly ashes is very diverse. The main phases encountered are a glass phase, together with quartz, mullite and the iron oxides hematite, magnetite and/or maghemite. Other phases often identified are cristobalite, anhydrite, freelime, periclase, calcite, sylvite, halite, portlandite, rutile and anatase. The Ca-bearing minerals anorthite, gehlenite, akermanite and various calcium silicates and calcium aluminates identical to those found in Portland cement can be identified in Ca-rich fly ashes.

**Incineration ash** (also called Incinerator bottom ash, IBA) is a form of ash produced in incineration facilities. This material is discharged from the moving grate of municipal solid waste incinerators. Incinerator bottom ash consists of particles in the size range of 0-100mm and is commonly discharged wet from an incinerator. Processing plants recover ferrous and non-ferrous metals, which can be divided into wet and dry operations. Modern wet systems can reliably cope with dry, moist or wet bottom ash. Dry systems require dry input materials, but drying /curing of wet discharged bottom ash requires space, time and handling efforts. Fine particles (0-2mm) can't be treated effectively by conventional separators and when moist they cause sticking due to capillary forces in combination with high surface areas. Removal of fines from bottom ash prior to the treatment plant phase can be a solution to these problems. Scrubbing brings fine particles into a slurry suspension, the subsequent drain screen removes the slurry from the coarse IBA (2-100mm), which can then directly be treated by an separator plant without the presence of fines. However, for the recovery of metals from the fines to date no efficient process has been described.

Both types of material contain a huge variety of trace metals, particularly led and copper, which can detrimental be toxic in subsequent biological recovery steps. However, they also comprise precious metals, such as for example gold, silver, platinum, palladium and rare earth metals (e.g. cerium, lanthanum, neodymium), the latter being highly interested for chip industry. It is a specific object of the present invention to recovery these metals from the secondary sources, where they are typically present in a total amount of at least 1 ppm, preferably of at least 10 ppm.

### SIEVING

The type of sieving is less critical. Typically, dry or wet sieving processes come into account; better results were obtained with wet sieving. In case that the starting material contains particles showing diameters significantly above 2 mm it is advantageous to subject the powders to an additional grinding step prior to sieving.

Typical sieving operations encompass the following alternatives:

**Throw action.** Here a throwing motion acts on the sample. The vertical throwing motion is overlaid with a slight circular motion which results in distribution of the sample amount over the whole sieving surface. The particles are accelerated in the vertical direction (are thrown upwards). In the air they carry out free rotations and interact with the openings in the mesh of the sieve when they fall back. If the particles are smaller than the openings, they pass through the sieve. If they are larger, they are thrown upwards again. The rotating motion while suspended increases the probability that the particles present a different orientation to the mesh when they fall back again and thus might eventually pass through the mesh.

Modern sieve shakers work with an electro-magnetic drive which moves a spring-mass system and transfers the resulting oscillation to the sieve stack. Amplitude and sieving time are set digitally and are continuously observed by an integrated control-unit. Therefore, sieving results are reproducible and precise (an important precondition for a significant analysis). Adjustment of parameters like amplitude and sieving time serves to optimize the sieving for different types of material. This method is the most common in the laboratory sector.

**Horizontal sieve shakers.** In a horizontal sieve shaker the sieve stack moves in horizontal circles in a plane. Horizontal sieve shakers are preferably used for needle-shaped, flat, long or fibrous samples, as their horizontal orientation means that only a few disoriented particles enter the mesh and the sieve is not blocked so quickly. The large sieving area enables the sieving of large amounts of sample, for example as encountered in the particle-size analysis of construction materials and aggregates.

**Tap sieving.** A horizontal circular motion overlies a vertical motion which is created by a tapping impulse. These motional processes are characteristic of hand sieving and produce a higher degree of sieving for denser particles (e.g. abrasives) than throw-action sieve shakers.

**Wet sieving.** Most sieve analyses are carried out dry, however with regard to the present invention wet sieving is preferred, since the sample is a very fine powder which tends to agglomerate (mostly < 45 µm) - in a dry sieving process this tendency would lead to a clogging of the sieve meshes and this would make a further sieving process impossible. A wet sieving process is set up like a dry process: the sieve stack is clamped onto the sieve shaker and the sample is placed on the top sieve. Above the top sieve a water-spray nozzle is placed which supports the sieving process additionally to the sieving motion. The rinsing is carried out until the liquid which is discharged through the receiver is clear. Sample residues on the sieves have to be dried and weighed. When it comes to wet sieving it is very important not to change the sample in its volume (no swelling, dissolving or reaction with the liquid).

**Air Circular Jet sieving.** Air jet sieving machines are ideally suited for very fine powders which tend to agglomerate and cannot be separated by vibrational sieving. The reason for the effectiveness of this sieving method is based on two components: A rotating slotted nozzle inside the sieving chamber and a powerful industrial vacuum cleaner which is connected to the chamber. The vacuum cleaner generates a vacuum inside the sieving chamber and sucks in fresh air through the slotted nozzle. When passing the narrow slit of the nozzle the air stream is accelerated and blown against the sieve mesh, dispersing the particles. Above the mesh, the air jet is distributed over the complete sieve surface and is sucked in with low speed through the sieve mesh. Thus the finer particles are transported through the mesh openings into the vacuum cleaner.

A suitable process and device for grinding secondary sources, such as for example incinerator combined ashes is described in WO 2017 172980 A1 (VALERIO).

The preferred particles size to be obtained by any of the sieving processes as explained above ranges from about 0.05 to about 1 mm, preferably from about 0.1 to about 0.2 mm, and more preferably from about 0.125 to about 0.15 mm wherein the content of said precious metals ranges from about 10 to about 20.000 ppm and preferably from about 50 to about 2.000 ppm, while the amounts of led and copper is less than 20 g/kg and less than 80 g/kg respectively.

### RECOVERY

The recovery of the precious metals from the sieve fraction can be performed for example by bioflotation, bioflocculation or bioleaching.

Flotation is a well-known process. It is said that miners discovered it while washing their clothes. Certain chemicals of the washing powder adsorbed with metal sulfides and made them float on the washing solution. Today, flotation is widely used for producing concentrates of raw materials, e.g. for separating metal sulfides of interest from undesired ones or from gangue material. An aqueous suspension of finely grained ore is conditioned with flotation chemicals, making the metal sulfides either more hydrophobic (collector) or more hydrophilic (depressant). In the first case, small air bubbles are produced which aggregate with the hydrophobic particles and make them float foam-like on the suspension. In the second case, hydrophilic sulfides are depressed, i.e. kept in the liquid phase. Although this is a very useful method it is environmentally harmful as currently used depressants are often toxic. For the purpose of the present invention it is therefore suggested using bacteria for flotation processes ("bioflotation"). Of particular interest are the so-called leaching bacteria, acidophilic metal sulfide oxidizing species, which are already used in hydrometallurgy. These bacteria selectively attach to sulfide surfaces (their substrate), forming a biofilm, i.e. a layer of bacterial cells plus excreted extracellular polymeric substances (EPS). The slimy matrix of EPS consists of polysaccharides and lipids, sometimes also proteins and nucleic acids are found. Bacterial attachment alters sulfides to become more hydrophilic. Consequently, leaching bacteria such as *Acidithiobacillus ferrooxidans* have successfully been employed as a depressant in pilot-scale bioflotation experiments.

A preferred alternative to biofloation is a bioleaching process. Bioleaching is the extraction of metals from different sources such as ores or secondary sources through the use of living organisms, which is much more environmentally friendly than the traditional heap leaching using cyanide. Bioleaching is one of several applications within biohydrometallurgy and it is used to recover e.g. copper, zinc, lead, arsenic, antimony, nickel, molybdenum, gold, silver, and cobalt. Bioleaching can involve numerous ferrous iron and sulfur oxidizing bacteria, including *Acidithiobacillus ferrooxidans* and *Acidithiobacillus thiooxidans.* The bacteria catalyse the breakdown of the mineral pyrite (FeS₂) by oxidising the sulfur and metal (in this case ferrous iron, (Fe²⁺)) using oxygen. This yields soluble products that can be further purified and refined to yield the desired metal. Bioleaching can also be achieved using microorganisms which produce organic acids such as citric acid. This form of leaching does not rely on microbial oxidation of metal but rather uses microbial metabolism as source of acids that directly dissolve the metal.

During hydrometallurgical processes, metal is extracted when the metal-containing material is leached in one of several ways. Leaching is typically accomplished by applying a lixiviant to a collection of ore. The most common lixiviant used in the mining industry is sulfuric acid (H₂SO₄) because it provides efficient and cost effective liberation of the metal from the ore. Therefore, the addition of acids is an advantageous method to increase metal recovery from secondary resources even in combination with bio-based mining processes as described above.

### BIOLEACHING

A process for recovering said precious metals from the sieve fractions incorporating a bioleaching procedure typically involves the following steps:
(i) bringing said fraction obtained in step (b) into contact with heterotrophic microorganisms capable of producing and releasing hydrocyanic acid;
(ii) adding a solvent or an aqueous nutrient solution capable of serving as a nutrient source for said microorganisms to the mixture;
(iii) depleting said waste materials from the precious metals contained therein by complexation of the metals with said hydrocyanic acid released by said micro-organisms;
(iv) separating the depleted solid waste material from the liquid containing the metal-cyano complexes;
(v) recovering the precious metals from their cyano-complexes in known manner.

### MICROORGANISMS

The selection of suitable microorganisms has been carried out on the basis of about 2.000 species from public and proprietary microbial strain collections. The microorganisms were found to be superior compared to other bioleaching organisms with respect to their ability of leaching precious metals which are present in ppm range.

Suitable microorganisms were selected from the group consisting of:
- *Bacillus megaterium,*
- *Bacillus mycoides,*
- *Chromobacterium aquaticum,*
- *Pseudomonas spec.,*
- *Rhodococcus spec.,*
- *Stenotrophomoas spec.,*
- *Streptomyces spec. and particularly*
- *Pseudomonas BR11571(DSM 32538)*

As mentioned above, these microorganisms show a surprising behavior in bioleaching, since they allow conducting the depleting step at a concentration of biogenic hydrocyanic acid released by them which is at most 50 % of the concentration of abiotic hydrocyanic acid required to transfer 100 % of the precious metal present in the waste material into metal-cyano complexes.

Currently it is not clear, what the scientific explanation for this interesting effect is, but obviously, the process follows a different mechanism and/or a different kinetic.

### CULTIVATING MEDIUM

The procedure involves two alternatives:
(i) (direct) one-step leaching or
(ii) (indirect) two-step leaching.

One-step leaching means, that slurry of finely grinded waste material is brought into contact with the microorganism. The most suitable solvent for this purpose is of course water. Either the microorganism is already dispersed in a nutrient solution or the nutrients or nutrient solutions are added separately. The characteristic of said one-step leaching process is that the microorganisms start producing and releasing biocyanide during the leaching process.

In the alternative, two-step leaching means that the microorganism is already cultivated in a nutrient solution to produce and release biocyanide, and said solution containing the microorganism, remaining nutrients and biocyanide is added to the waste material slurry.

Suitable nutrient compositions are well-known from the prior art and contain minerals, trace elements and carbohydrates, preferably sugar which are required for cultivating and growing the micro-organisms.

### DEPLETING STEP

Typically the depleting or leaching step takes place in a stirred vessel. The waste material is grinded - if required - to a small particle size for example by means of a ball mill, subjected with water or any other suitable solvent to form slurry and pumped into the reactor. Usually, the slurries show a solid matter content of about 0.1 to about 50 % b.w., preferably of about 1 to about 30 % b.w. and more preferably of about 2.5 to about 25 % b.w.

It is also desirous conducting depletion within a pH range of from about 7 to about 10. Higher pH values are advantageous since HCN is kept in the solution and evaporation of hazardous chemicals is reduced if not avoided. At the same time, more extraction agent is available for the process which improves efficacy. In a preferred embodiment the process is started at a pH of about 7.5 to increase growth of the micro-organisms and later shifted step by step towards higher values to increase the yields.

The micro-organisms are added - either as dry biomass or a solution; depending whether it is a one or two-step process also nutrients are added. Typically, leaching requires an amount of microorganisms (cell dry weigth, cdw) in the range of 0.01 to about 10 % by weight, preferably about 0.1 to about 5 % by weight and particularly about 0.5 to about 5 % b.w. - calculated on the amount of waste material that needs to be depleted from the precious metals.

Leaching is conducted at a temperature slightly depending on the nature of the microorganisms, typically within a range of from about 20 to about 40 °C, preferably at temperatures of from 25 to 35 °C according to the working optimum of the microorganisms. Typically, leaching takes place under vigorous stirring, optionally the reactor is aerated. To achieve a sufficient degree of depleting leaching typically requires a reaction time of about 10 to about 120 hours, and preferably about 16 to about 36 hours.

### SEPARATION

Once leaching is completed, the mixture is transferred into a separation unit. In its easiest embodiment the separation takes place in a tank by gravity. More efficient are filtration units, in particular filter presses, which are available in different forms:

For example, a plate and frame filter press is the most fundamental design, and many now refer it as a "filter plate". This type of filter press consists of many plates and frames assembled alternately with the supports of a pair of rails. The presence of a centrifuge pump ensures the remaining suspended solids do not settle in the system, and its main function is to deliver the suspension into each of the separating chambers in the plate and frame filter. For each of the individual separating chambers, there is one hollow filter frame separated from two filter plates by filter cloths. The introduced slurry flows through a port in each individual frame, and the filter cakes are accumulated in each hollow frame. As the filter cake becomes thicker, the filter resistance increases as well. So when the separating chamber is full, the filtration process is stopped as the optimum pressure difference is reached. The filtrate that passes through filter cloth is collected through collection pipes and stored in the filter tank. Filter cake (suspended solid) accumulation occurs at the hollow plate frame, then being separated at the filter plates by pulling the plate and frame filter press apart. The cakes then fall off from those plates and are discharged to the final collection point.

Cake discharge can be done in many ways. For example: Shaking the plates while they are being opened or shaking the cloths. A scraper can also be used, by moving from one chamber to another and scraping the cake off the cloth. At the end of each run, the cloths are cleaned using wash liquid and are ready to start the next cycle.

In the alternative, an automatic filter press has the same concept as the manual filter and frame filter, except that the whole process is fully automated. It consists of larger plate and frame filter presses with mechanical "plate shifters". The function of the plate shifter is to move the plates and allow rapid discharge of the filter cakes accumulated in between the plates. It also contains a diaphragm compressor in the filter plates which aids in optimizing the operating condition by further drying the filter cakes.

A recessed plate filter press is usually made up of polypropylene squares at about 2 to 4 feet across with a concave depression and a hole in the center of each. Two plates join together to form a chamber to pressurize the slurry and squeeze the filtrate out through the filter cloth lining in the chamber. It is capable of holding 12 to 80 plates adjacent to each other, depending on the required capacity. When the filter press is closed, a series of chambers is formed. The differences with the plate and frame filter are that the plates are joined together in such a way that the cake forms in the recess on each plate, meaning that the cake thickness is restricted to 32mm unless extra frames are used as spacers. However, there are disadvantages to this method, such as longer cloth changing time, inability to accommodate filter papers, and the possibility of forming uneven cake.

The preferred embodiment of the present invention encompasses separation by means of a chamber filter press or a centrifuge.

In case the process is conducted in a continuous manner, also pressure-forced filtration could be of advantage, although more cost intensive. For example, diafiltration represents a suitable alternative, where slurry is separated from the liquid phase by means of membranes made of ceramics, steel or polymers.

It is also possible to add further additives for facilitating separation such as redox-modulators (e.g. hydrogen peroxide) or flocculation agents such as poly acrylates, alginates, starches and the like.

### ADSORPTION

In order to recover the precious metals dissolved as cyano-complexes from the solvent, the liquid phase is transferred into an adsorption unit. It its easiest embodiment, said unit is a stirred vessel filled with any adsorption agent that is capable of physically binding the metal-cyano complexes out of the liquid phase. Another embodiment could be a packed column. Suitable adsorption agents encompass resins that bind metals through coordination or ion-exchange chemistry, including but not limited to Lewatit® MP 62 or other resins of Lewatit® type supplied for example by Lanxess. In case the step is carried out in a vessel, complete adsorption requires about 15 to about 60 minutes, and preferably about 20 to 30 minutes at ambient temperature. Carrying out adsorption in a column has the advantage that the step can be conducted in a continuous manner.

### RECOVERY

A first suitable manner to remove the precious metal-cyano complexes adsorbed by the adsorption agent is to elute them by means of a suitable solvent, removing the solvent and liberating the metals from the complex by chemical means, for example by pH-change.

Preferably, the precious metals are recovered from said adsorption agents by incineration of the adsorption agent. The residue can be subjected to further purification processes.

### EXAMPLES

### EXAMPLES 1 and 2

### Sieving experiments

Two samples of incineration ash concentrates were subjected to graduation by means of wet sieving as shown in **Table 1:**

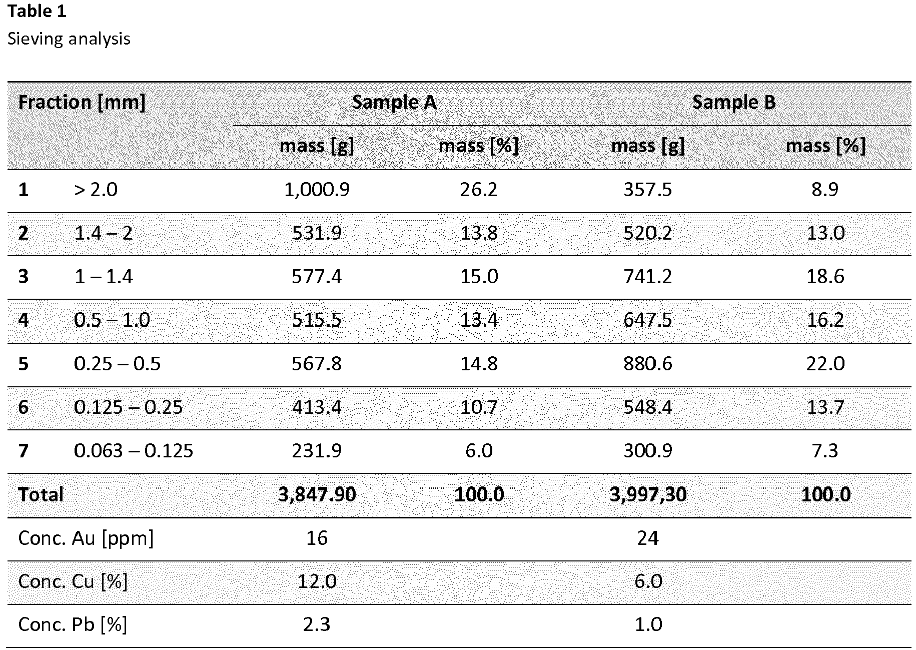

The following **Table 2** shows the content of certain metals, including said precious metals within the various fractions.

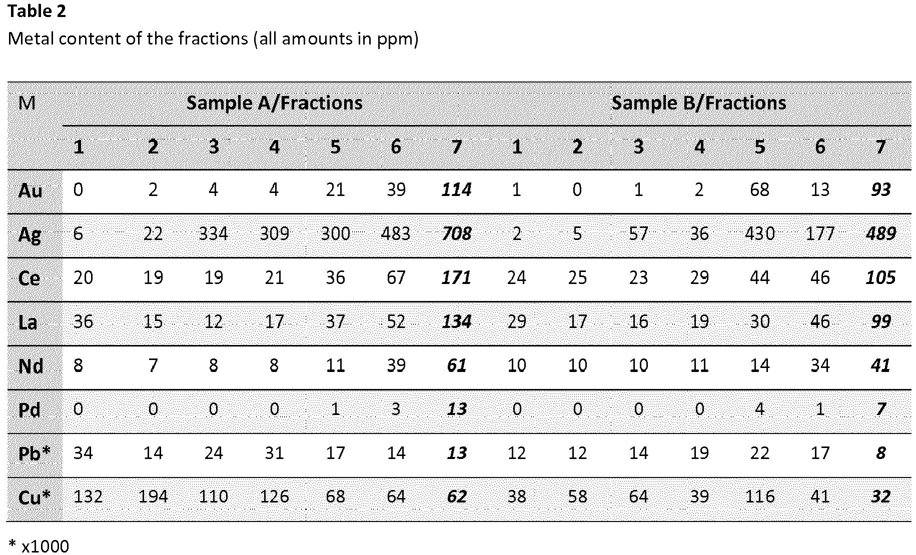

**Table 2** shows that precious metals are enriched in the fraction comprising those particles having the smallest average size, while waste metals like led and copper are simultaneously depleted. In particular the content of gold in fraction 7 for both samples - calculated on the total amount in all fractions taken together - has been 50 to 60 %.

### EXAMPLES 3 AND 4, COMPARISON EXAMPLES C1 TO C4

### Bioleaching of incineration ash fractions

The two samples A and B were subjected to bioleaching in a leaching reactor using *Pseudomonas* BR 11571, termed *Candidatus Pseudomonas metallosolvens,* having Accession Deposit Number DSM 32538 as heterotrophic microorganisms capable of producing and releasing hydrocyanic acid.

**Examples 3 and 4** are according to the invention and were conducted using fractions 7 (0.063 - 0.125 mm), while **Examples C1 and C2** serve for comparison and were conducted using the fractions 1 of Sample A and Sample B respectively, **Examples C3 and C4** also serve for comparison and were conducted with the combined fractions 1 to 7 of Sample A and Sample B respectively.

500 g of each sample were placed into a leaching reactor having a volume of 1.2 I. The reactor was filled with 0.75 I of an aqueous solution comprising the microorganism in an amount of about 1 g/l (wet weight), also containing minerals and carbohydrates in amounts suitable to serve as nutrients for the microorganisms. To support hydrocyanic acid production, casamino acids and glycin (0.5 % w/v) were added. The mixture was heated to 28 °C and agitated over a period of 48h at about 500 rpm and aeration of 0.5 vvm. The slurry thus obtained was mixed with 16 ppm of an anionic coagulant, 20 ppm aluminum silicate and 100 ppm of a neutral polyacrylate to induce flocculation and facilitate the following filtration in a Beco Integra LAB60P filtration unit. The cleared liquid phase was transferred to a column filled with a polymeric metal adsorption resin (3 ml bed volume). The solution passed the column with a flow rate of 26 ml/h. Finally, the resin containing the metal-cyano complexes was transferred into a combustion unit and incinerated with a temperature gradient from 100-1100°C. From the residue the precious metals were recovered. The results are shown in **Table 3.** Provided is the percentage of gold and silver calculated on the total amount of gold and silver in the respective sample.

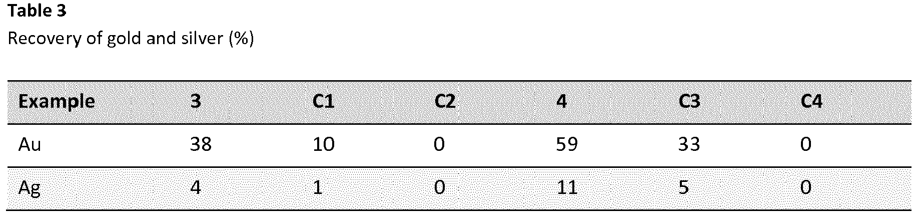

Surprisingly it was observed that bioleaching of fraction 7 led to a higher percentage of recovery of gold and silver compared to bioleaching of fraction 1. Therefore, precious metals are not only enriched in the fraction with the smallest particle diameters, small particles sizes are also advantageous with respect to percentage of recovery. Finally, it was observed that bioleaching of the complete fraction did not work at all, perhaps due to a poisoning of the micro-organisms caused by the high content of metals like led and cadmium.

## Claims

1. A process for recovering precious metals from secondary sources encompassing the following steps:
(a) providing a secondary source selected from the group consisting of fly ashes, incineration ashes or their concentrates;
(b) subjecting said source of step (a) to a sieving process to obtain a fraction comprising particles having a diameter ranging from about 0.05 to about 1 mm; and
(c) subjecting the fraction obtained in step (b) to any process capable of recovering said precious metals from the waste residue.

2. The process of Claim 1 encompassing the following steps:
(a) providing a secondary source selected from the group consisting of fly ashes, incineration ashes or their concentrates;
(b) subjecting said source of step (a) to a sieving process to obtain a fraction comprising particles having a diameter ranging from about 0.1 to about 0.2 mm; and
(c) subjecting the fraction obtained in step (b) to any process capable of recovering said precious metals from the waste residue.

3. A process for increasing the amount of precious metals in a secondary source, encompassing the following steps:
(a) providing a secondary source selected from the group consisting of fly ashes, incineration ashes or their concentrates;
(b) subjecting said source of step (a) to a sieving process to obtain a fraction comprising particles having a diameter ranging from about 0.05 to about 1 mm.

4. The process of Claim 3, encompassing the following steps:
(a) providing a secondary source selected from the group consisting of fly ashes, incineration ashes or their concentrates;
(b) subjecting said source of step (a) to a sieving process to obtain a fraction comprising particles having a diameter ranging from about 0.1 to about 0.2 mm.

5. The process of either Claim 1 or 3, wherein said secondary sources show an average particle diameter ranging from about 0.05 to about 2 mm.

6. The process of either Claim 1 or 3, wherein said precious metals are selected from the group consisting of gold, silver, platinum, palladium and rare earth metals.

7. The process of either Claim 1 or 3, wherein said precious metals are present in said secondary sources in a total amount of at least 1 ppm.

8. The process Claim 7, wherein said precious metals are present in said secondary sources in a total amount of at least 10 ppm.

9. The process of either Claim 1 or 3, wherein said sieving process is a dry or a wet sieving process.

10. The process of either Claim 1 or 3, wherein fractions comprising particles having a diameter ranging from about 0.05 to about 1 mm are obtained, containing said precious metals in amounts ranging from about 10 to about 20.000 ppm.

11. The process of Claim 10, wherein fractions comprising particles having a diameter ranging from about 0.1 to about 0.2 mm are obtained, containing said precious metals in amounts ranging from about 50 to about 2.000 ppm.

12. The process of either Claim 1 or 3, wherein fractions comprising particles having a diameter ranging from about 0.05 to about 1 mm are obtained, containing led in amounts of less than 20 g/kg and copper in amounts of less than 80 g/kg.

13. The process of Claim 12, wherein fractions comprising particles having a diameter ranging from about 0.1 to about 0.2 mm are obtained, containing led in amounts of less than 20 g/kg and copper in amounts of less than 80 g/kg.

14. The process of either Claim 1 or 3, wherein the fractions are obtained by vertical and/or horizontal sieve shaking, tapping sieving or by means of an air circulation jet.

15. The process of Claim 1, wherein the fraction of step (b) is subjected to a bioleaching, bioflotation or bioflocculation procedure.
